(19) Europäisches Patentamt
European Patent Office
Office européen des brevets

(11) Numéro de publication : **0 360 707 B1**

(12) # FASCICULE DE BREVET EUROPEEN

(45) Date de publication du fascicule du brevet : **09.06.93 Bulletin 93/23**

(51) Int. Cl.$^5$ : **C08G 18/34,** C08G 18/08, C08G 73/14, D01F 6/78

(21) Numéro de dépôt : **89420347.0**

(22) Date de dépôt : **14.09.89**

(54) **Solutions de polyamides imides et leur procédé d'obtention.**

Le dossier contient des informations techniques présentées postérieurement au dépôt de la demande et ne figurant pas dans le présent fascicule.

(30) Priorité : **21.09.88 FR 8812559**

(43) Date de publication de la demande : **28.03.90 Bulletin 90/13**

(45) Mention de la délivrance du brevet : **09.06.93 Bulletin 93/23**

(84) Etats contractants désignés : **AT BE CH DE ES FR GB IT LI LU NL SE**

(56) Documents cités :
**EP-A- 0 194 058**
**DE-C- 2 106 704**

(56) Documents cités :
**US-A- 4 736 008**
**CHEMICAL ABSTRACTS, vol. 95, no. 5, septembre 1981, page 45, résumé no. 82127v, Columbus, Ohio, US; && JP-A-81 24 007 (NITTO ELECTRIC INDUSTRIAL CO.,LTD) 07-03-1981**

(73) Titulaire : **RHONE-POULENC FIBRES**
**129, rue Servient**
**F-69003 Lyon (FR)**

(72) Inventeur : **Barthelemy, Pascal**
**21 rue de la Part Dieu**
**F-69003 Lyon (FR)**

(74) Mandataire : **Esson, Jean-Pierre et al**
**Rhône-Poulenc Fibres Direction de la Propriété Industrielle Centre de Recherches des Carrières B.P. 62**
**F-69192 Saint-Fons Cedex (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention concerne des solutions de polyamides-imides directement filables et conformables dans un mélange solvant

Elle concerne également un procédé pour l'obtention de solutions présentant une coloration améliorée.

Il est déjà connu selon le FR 2079785 de préparer des solutions à base de polyamides-imides dans la N-méthylpyrrolidone, mais les solutions et les polymères ainsi obtenus présentent une coloration intense brune limitant les possibilités de coloration ultérieure des articles mis en forme à partir de ces solutions.

Il est également connu selon la demande européenne 0194058 de préparer des polyamides et/ou des polyamides-imides peu colorés grâce à l'utilisation conjointe d'un catalyseur du type carbonate, hydrogénocarbonate, hydroxyde ou sel d'acide polycarbonylique d'un métal alcalin et d'un solvant du type N,N'-diméthyléthylène urée.

Il a maintenant été trouvé qu'il était possible d'obtenir des solutions de certains polyamides-imides (PAI) peu colorées, dans des conditions moins onéreuses, que celles préconisées dans la demande européenne 0194058, ceci sans nécessiter l'utilisation de catalyseur lors de la phase de polycondensation.

La présente invention concerne des solutions limpides de PAI directement filables et conformables contenant :

a) 4 à 35 % en poids d'un PAI comportant

- 82 à 94 % de motifs de récurrence amide-imide (A) de formule :

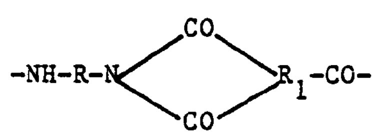

(par rapport au nombre total de motifs de récurrence)

- 1 à 3 % de motifs de récurrence amide (B) de formule :

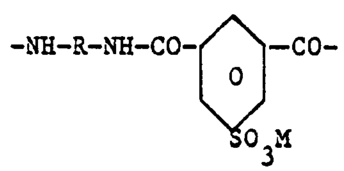

- et 5 à 15 % de motifs amide (C) de formule :

$$-NH-R-NH-CO-R_2-CO-$$

dans lesquels :

R = groupe organique divalent

$R_1$ = radical aromatique trivalent

$R_2$ = radical aromatique divalent

M = métal alcalin ou alcalino terreux,

et possèdant un indice de polydispersité I inférieur ou égal à 2,1, dans

b) un mélange solvant comprenant :

- 45 à 100 % en poids de diméthyéthylène urée de pH $\leqq$7
- 0 à 55 % en poids d'un solvant aprotique polaire anhydre de point d'ébullition élevé.

Elles possèdent de plus une coloration quantifiée par mesure de l'absorbance à une longueur d'onde 500 nm d'une solution à 21 % de polymère diluée 10 fois sur un spectrophotomètre Philips PU 8600 comprise entre 0,010 et 0,060 de préférence 0,010 et 0,040.

La présente invention concerne également un procédé séquencé pour l'obtention de solutions limpides, directement filables et conformables à base de polyamide-imide comprenant la réaction de polycondensation effectuée dans la DMEU de pH $\leqq$7, la concentration en polymère avant dilution étant alors comprise entre 10 et 40 %, puis la dilution, effectuée à une température comprise entre 120 et 200°C dans un solvant aprotique polaire anhydre de haut point d'ébullition, la concentration finale dans le mélange solvant étant comprise entre 4 et 35 %.

Les solutions selon la présente invention sont préparées par réaction dans de la DMEU de pH $\leqq$7 entre :

- au moins une diisocyanate de formule OCN-R-NCO dans laquelle R est un groupe organique divalent.
- un anhydride acide aromatique
- un dicarboxy benzène 3,5 sulfonate alcalin ou alcalino terreux, en proportions telles que le rapport molaire, diisocyanate/ensemble des réactifs acides, soit sensiblement égal à 1,
- un diacide aromatique.

Les différents composés acides ou anhydrides acides sont présents dans les proportions molaires suivantes :

- anhydride acide aromatique de 82 à 94 % par rapport à l'ensemble des réactifs acides, de préférence 85 à 94 %.
- dicarboxy benzène sulfonate en proportion 1 à 3 % par rapport à l'ensemble des réactifs acides.
- diacide aromatique de 5 à 15 %.

Parmi les diisocyanates utilisables ont peut citer les diisocyanates aromatiques, les toluylènes diisocyanates, de préférence symétriques tel que le diphénylméthane -4,4' diisocyanate, le diphényléther-4,4' diisocyanate ou des diisocyanates aliphatiques tels que l'hexaméthylène -1,6 diisocyanate, le bis-cyclohéxyl diisocyanate.

Il est aussi possible d'utiliser plusieurs des diisocyanates cités ci-dessus. Mais on utilise préférentiellement le diphénylméthane 4,4' diisocyanate et le diphényléther 4,4' diisocyanate.

Comme anhydride acide aromatique on utilise de préférence l'anydride trimellique.

Comme dicarboxy 3,5 benzène sulfonate de métal alcalin ou alcalino terreux on utilise de préférence le sulfonate de sodium ou de potassium.

Parmi les diacides aromatiques, les acides téréphtalique et isophtalique sont généralement utilisés quoique l'acide téréphtalique soit préféré.

La réaction de polycondensation a lieu à température élevée, (généralement comprise entre 170 et 200°C) dans la DMEU de pH $\leqq$7.

A la fin de la réaction de polycondensation la concentration du polymère est comprise entre 10 et 40 % de préférence entre 12 et 38 % et l'on effectue une dilution avec un solvant polaire aprotique anhydre de sorte que la concentration finale en polyamide-imide soit comprise entre 4 et 35 %, de préférence 5 et 35 %.

Il est important, dans les conditions de l'invention, que la DMEU ait un pH $\leqq$7 ; dans le cas contraire la réaction de polycondensation ne peut pas avoir lieu.

La dilution est effectuée à une température comprise entre 120 et 200°C, de préférence entre 145 et 190 °C, mais les deux opérations doivent être réalisées de manière séquencée, sinon les solutions selon l'invention ne peuvent pas être obtenues : soit le polymère précipite et ne se redissout pas soit la viscosité est insuffisante.

Parmi les solvants de dilution la N-méthylpyrrolidone (NMP), le diméthylacétamide (DMAC), le diméthylformamide (DMF), la tétraméthylurée (TMU), la $\gamma$ butyrolactone ($\gamma$ BL) conviennent particulièrement bien, quoique la DMEU puisse aussi être utilisée. La réaction de polycondensation est réalisée uniquement dans la DMEU, le solvant de dilution servant uniquement pour la seconde phase de la préparation des solutions. Toutefois la DMEU peut être utilisée aussi comme solvant de dilution mais n'est pas préférée pour des raisons économiques, car s'est un solvant onéreux, et pour des raisons pratiques car les solutions obtenues possèdent des viscosités très élevées nécessitant une dilution complémentaire.

Si l'on inverse l'ordre d'introduction des solvants, excepté dans le cas de la DMEU, ou que l'on utilise simultanément les deux solvants pour la phase de polycondensation, soit la polycondensation n'a pas lieu, soit des précipitations se produisent soit encore la viscosité est insuffisante.

Par ailleurs, il est important que la DMEU ait un pH légèrement acide, dans le cas contraire la réaction de polycondensation ne peut pas avoir lieu.

L'utilisation d'un solvant de dilution tel que ceux cités ci-dessus conjointement à l'utilisation de DMEU, pour l'obtention de solutions de PAI très peu colorées constitue un effet tout à fait inattendu puisque selon la demande européenne 0 194 058, ce problème de coloration est lié à la présence de solvants de type amide.

Par ailleurs, toujours en se référant à la demande européenne 0 194 058, en particulier les exemples, il est tout à fait surprenant que, avec la DMEU comme solvant de polycondensation et en absence de tout catalyseur, il ait été possible d'obtenir des polyamides-imides de viscosité suffisamment élevée.

Les solutions ainsi obtenues sont limpides, peu colorées et permettent une coloration quantifiée par la mesure de l'absorbance à une longueur d'onde de 500 nm d'une solution à 21 % de polymère dilué 10 fois sur un spectrophotomètre Philips PU 8600 comprise entre 0,010 et 0,060, de préférence entre 0,010 et 0,040.

La viscosité des solutions obtenues selon l'invention peut varier largement. Elle est mesurée sur une solution à 21 % de polymère sur un appareil de type Epprecht Rhéomat 15 - Cuve D+E.

En particulier les solutions obtenues avec la DMEU utilisée à la fois comme solvant de préparation et comme solvant de dilution possèdent des viscosités très élevées et il est nécessaire de rajouter du solvant pour leur mise en forme ultérieure.

Les solutions selon l'invention sont conformables et en particulier filables par les procédés connus de filage à sec ou à l'humide. Elles peuvent être obtenues en discontinu ou en continu au moyen de tout appareil approprié.

Elles présentent l'avantage d' un plus faible coût lorsque le solvant de dilution n'est pas la DMEU, ceci sans pour autant faire apparaître de problème technique.

De plus le procédé d'obtention des solutions selon l'invention possède une souplesse permettant de faire varier leur viscosité pour un polymère de masses identiques.

Dans les exemples qui suivent les valeurs de $\overline{Mn}$ et $\overline{Mw}$ sont déterminées par chromatographie d'exclusion sur gel (GPC) dans la NMP à 80°C et 0,1 mole/litre de bromure de lithium, les masses étant exprimées par rapport à un étalonnage polystyrène.

L'indice de polydispersité I correspond au rapport $\frac{\overline{Mw}}{\overline{Mn}}$. On remarque d'après les exemples qu'il est faible, ce qui correspond à un resserrement de la distribution des masses moléculaires avec des conséquences surprenantes sur les propriétés physiques et thermiques des produits obtenus, en particulier on observe une moindre dégradation thermique du polymère (mesure à 375°C sur polymère précipité), de la cinétique de dégradation, c'est à dire la perte de poids, représentée par V en % $mn^{-1}$, et une plus faible photodégradation (sur film) par mesure des pourcentages d'énergie à la rupture perdue avant et après exposition au XENOTEST.

Les exemples ci-dessous illustrent la présente invention sans la limiter.

EXEMPLE 1 -

Appareillage :

Réacteur en verre de 1,5 l, équipé d'un agitateur de type ancre en acier inoxydable, d'une ampoule de coulée de 250 ml destinée à l'addition du solvant de dilution, d'une arrivée d'azote sur compte-bulle, vitesse de rotation 85 t/mn, d'une sonde thermométrique et d'un réfrigérant à reflux avec sortie sur compte-bulle. La sortie du réfrigérant est reliée à une colonne garnie de 600 g de chaux sodée destinée à piéger le gaz carbonique qui se dégage au cours de la réaction de polycondensation. Une balance placée à proximité de l'installation permet d'enregistrer l'augmentation de poids de la colonne garnie de chaux sodée (accès direct en poids de $CO_2$ dégagé)

Le chauffage du réacteur est amené par un bain d'huile silicone piloté par système de régulation assisté d'un émetteur de programme de montée en température et éventuellement de maintien en isotherme à une température donnée (dans la majeure partie des cas 198°C).

Dans tous les essais la "rampe" de mise en température suivante a été adoptée :

- montée de 18° à 98°C en 30 mn
- " 98° à 185°C en 70 mn
- " 185° à 198°C en 20 mn
- isotherme à 198°C pendant 5 à 30 mn.

Réactifs :

- anhydride trimellique (ANTM) 51,6g (0,2688 mole)
- acide téréphtalique (AT) 8,9g (0,0537 mole)
- sel de sodium de l'acide sulfo-5 isophtalique (AISNa) 3,59g(0,0134 mole)
- Diisocyanate 4,4' diphénylméthane (MDI) 84g (0,336 mole)
- Diméthyléthylène urée (DMEU) de pH ≦ 7
  - . polycondensation 322g (d=1,055) 305ml
  - . dilution 124g (d=1,055) 117,5ml

Rapport molaire des réactifs :

Stoéchiométrie entre les fonctions acides + anhydride carboxylique et les fonctions isocyanate.

Mode opératoire :

L'appareil étant purgé par un courant d'azote durant 1 heure, on charge sous léger contre-courant d'azote environ les 3/4 de la DMEU réservée à la réaction de polycondensation, met l'agitateur en mouvement puis introduit successivement l'ANTM, l'AT, l'AISNA, le MDI et le reste de la DMEU. Le chauffage de la masse réactionnelle est démarré aussitôt en appliquant la "rampe" de montée en température décrite au paragraphe 1.

Au cours de cette opération on note les observations suivantes :

- la dissolution des réactifs est totale à 98°C
- le dégagement de $CO_2$ commence vers 110°C, atteint son maximum vers 170°C et se termine à 198°C.
- légère exothermie vers 170°C
- la réaction est totale avec un dégagement de 0,672 mole de $CO_2$.

La réaction est poursuivie en isotherme à 198°C durant 45 mn. A ce stade, la masse réactionnelle dont la concentration en matière sèche est de 26,90 % en poids est très visqueuse. On retire le bain d'huile et ajoute en 15 mn la DMEU de dilution, la température de la masse chute de 198°C à 136°C et la concentration en matière sèche de 26,9 à 21 % en poids.

L'opération est abandonnée, agitation arrêtée, sous légère surpression d'azote. Quand la température de la masse est redescendue vers 50°C on démonte le réacteur et stocke la solution en container verre de 1 l.

Caractérisation :

Viscosité :

viscosimètre Epprecht Rhéomat 15, cuve D+E
viscosité absolue à 25°C : 6030 poises

Masses moléculaires :

| Mn | Mw | Mz | polydispersité |
|---|---|---|---|
| 50050 | 104640 | 175560 | 2,09 |

Coloration :

absorbance à $\lambda$ = 500nm : 0,018

EXEMPLE 2 -

On prépare un polyamide-imide à partir des mêmes monomères que ceux utilisés dans l'exemple 1 et selon un procédé identique mais en utilisant comme solvant :

- de polycondensation : DMEU ....... 223 g .... 211 ml
- de dilution : $\gamma$ Butyrolactone ($\gamma$BL) 223 g .... 197 ml

A température ambiante le PAI est soluble dans le mélange solvant.

Masses moléculaires du polyamide :

$\overline{Mn}$ = 48280 - $\overline{Mw}$ = 93020 - Indice de polydispersité I = 1,93

Les caractéristiques des solutions sont réunies dans le tableau 1 ci-dessous.

EXEMPLE 3 -

On prépare un polyamide-imide de même nature chimique que celui de l'exemple 1 et selon un procédé identique mais en utilisant comme solvant :

- de polycondensation : DMEU ...... 223 g .... 211 ml
- de dilution :
  diméthylacétamide (DMAC)..... 223 g .... 237 ml

La température de la masse réactionnelle est abaissée à 160°C avant dilution. Le PAI obtenu est soluble dans le mélange solvant.

Masses moléculaires du PAI :
$\overline{Mn}$ = 41660 - $\overline{Mw}$ = 83720 - I = 2,01
La solution obtenue est limpide et stable dans le temps à 20°C. Ses caractéristiques sont consignées dans le tableau 1 ci-dessous.

EXEMPLE 4 -

On prépare un polymère de même nature chimique et selon le même procédé que celui indiqué dans l'exemple 1, à l' exception du mélange solvant :

- polycondensation DMEU ......... 223 g .... 211 ml
- dilution tétraméthylurée (TMU). 223 g .... 230 ml

La température de la masse réactionnelle est abaissée à 170°C avant addition de TMU.
La solution de polymère est limpide à 20°C.
Caractéristiques du polymère :
$\overline{Mn}$ = 46180 - $\overline{Mw}$ = 92229 - I = 2,00
Les caractéristiques de la solution sont indiquées dans le tableau 1 ci-dessous.

EXEMPLE 5 -

On prépare un polymère identique à celui de l'exemple 1 et selon le même procédé mais en utilisant le mélange solvant suivant:

- polycondensation DMEU ........ 223 g .... 211 ml
- dilution diméthylformamide (DMF)223 g .... 237 ml

Avant l'addition de DMF, la température de la masse réactionnelle est abaissée à 20°C.
La solution est limpide à 20°C et le polymère présente les caractéristiques suivantes :
Masses moléculaires : $\overline{Mn}$ = 45300 - $\overline{Mw}$ = 87370 - I = 1,93
Les caractéristiques des solutions sont données dans le tableau 1 ci-dessous.

Exemple 5 comparatif -

On prépare une solution de polyamide-imide à partir des mêmes monomères que ceux décrits dans l'exemple 1 mais en utilisant comme solvant de polycondensation et de dilution la N-méthyl 2 pyrrolidone (NMP).
Masses moléculaires du polymère :
$\overline{Mn}$ = 28700 - $\overline{Mw}$ = 81700 - I = 2,80

TABLEAU 1

| Ex. | Solvant de réaction/dilution | Rapport pondéral % | Coloration | Viscosité 25°C-21 % |
|---|---|---|---|---|
| 1 | DMEU/DMEU | 72/28 | 0,018 | 6030 |
| 2 | DMEU/γBL | 50/50 | 0,018 | 779 |
| 3 | DMEU/DMAC | 50/50 | 0,013 | 447 |
| 4 | DMEU/TMU | 50/50 | 0,010 | 455 |
| 5 | DMEU/DMF | 50/50 | 0,032 | 349 |
| 5C | NMP/NMP | 72/28 | 0,505 | 800 |

EXEMPLE 6 -

L'appareillage utilisé est celui décrit dans l'exemple 1.

Réactifs :

- Anhydride trimellique (ANTM) 61,44 g (0,32 mole)
- Acide téréphtalique (AT) 10,62 g (0,064 mole)
- Sel de sodium de l'acide sulfo-5 isophtalique (AISNa) 4,29 g (0,016 mole)
- Diisocyanate 4,4' de diphényléther (DIDE) 100,80 g (0,4 mole)
- Diméthyléthylène urée (DMEU) pH $\leqq 7$
  - . polycondensation 391,5 g (d=1,055)371 mole
  - . dilution 153 g (d=1,055)145 mole

Rapport molaire des réactifs :

Stoéchiométrie entre les fonctions acides + anhydre carboxylique et les fonctions isocyanates.

Mode opératoire :

L'appareil étant purgé par son courant d'azote durant 1 heure, on charge sous léger contre-courant d'azote environ les 3/4 de la DMEU réservée à la réaction de polycondensation, met l'agitateur en mouvement puis introduit successivement l'ANTM, l'AT, l'AISNa, le DIDE et le reste de la DMEU. Le chauffage de la masse réactionnelle est démarrée aussitôt en appliquant la "rampe" de montée en température décrite dans l'exemple 1. Au cours de cette opération on note les observations suivantes :

- la dissolution des réactifs est totale vers 80-85°C
- le dégagement de $CO_2$ commence vers 110°C, atteint son maximum vers 160-170°C et se termine à 198°C.
- légère exothermie au cours du palier à 198°C
- la réaction est totale avec un dégagement de 0,8 mole de $CO_2$.

La réaction est poursuivie en isotherme à 190°C durant 20 mn. A ce stade, la masse réactionnelle dont la concentration en matière sèche est de 26,61 % en poids est très visqueuse. On retire le bain d'huile et ajoute en 17 mn la DMEU de dilution, la température de la masse chute de 198° à 135°C et la concentration en matière sèche de 26,61 à 20,68 % en poids.

L'opération est abandonnée, agitation arrêtée, sous légère surpression d'azote. Quand la température de la

masse est redescendue vers 50°C on démonte le réacteur et stocke la solution en container verre de 1 l.

Caractérisation :

Viscosité :

Viscosimètre Epprecht Rhéomat 15, cuve D + E.
viscosité absolue à 25°C : 3342 poises

Masses moléculaires :

| $\overline{Mn}$ | $\overline{Mw}$ | Polydispersité (I) |
|---|---|---|
| 49120 | 82020 | 1,67 |

Coloration :

Elle est déterminée sur le collodion dilué 10 fois par mesure de l'absorbance à 25°C à = 500nm sur spectrophotomètre Philips PU 8600 : Absorbance à $\lambda$ = 500nm : 0,030

EXEMPLE 7 -

On prépare un PAI de structure chimique identique à celui de l'exemple 6 mais en utilisant comme mélange solvant :

- solvant de polycondensation DMEU ... 326,7g ... 309 ml
- solvant de dilution :
  $\gamma$ Butyrolactone ($\gamma$BL) ............. 217,8g ... 193 ml

La solution est limpide et stable à 20°C.
Masses moléculaires du PAI : $\overline{Mn}$ = 28250 - $\overline{Mw}$ = 53580 - I = 1,90
Les caractéristiques de la solution sont indiquées dans le tableau 2 ci-dessous.

EXEMPLE 8 -

On opère de la manière indiquée dans l'exemple 6 pour l'obtention d'un même PAI avec les solvants suivants :

- solvant de polycondensation ...... 326,7 g .... 309 ml
- solvant de dilution :
  diméthylacétamide (DMAC) ...... 217,8 g .... 232 ml

Avant addition du DMAC, la température de la masse réactionnelle est abaissée à 160°C.
La solution est limpide à 20°C.
Masses moléculaires du polymère :
$\overline{Mn}$ = 48850 - $\overline{Mw}$ = 100960 - I = 2,07
Les caractéristiques de la solution sont indiquées dans le tableau 2 ci-dessous.

EXEMPLE 9 -

On opère de la manière indiquée à l'exemple 6 mais en utilisant le mélange solvant suivant :

- polycondensation : DMEU .......... 326,7 g .... 309 ml
- dilution : tétraméthyl urée(TMU).. 217,8 g .... 224 ml

Avant addition de la TMU la température de la masse réactionnelle est abaissée à 170°C. La solution est limpide à 20°C.
Masses moléculaires du polymère :
$\bar{Mn}$ = 62240 - $\bar{Mw}$ = 119280 - I = 1,92
Les caractéristiques de la solution sont données dans le tableau 2 ci-dessous.

EXEMPLE 10 -

On opère de la manière indiquée à l'exemple 6 mais en utilisant le mélange solvant suivant :

- polycondensation : DMEU .......... 391,5 g .... 371 ml
- dilution diméthylformamide (DMF) . 153 g ...... 163 ml

Avant addition du DMF, la température de la masse réactionnelle est abaissée à 150°C.

Masses moléculaires du polymère :

$\bar{Mn}$ = 42720 - $\bar{Mw}$ = 73840 - I = 1,73
Les caractéristiques des solutions sont données dans le tableau 2 ci-dessous.

TABLEAU 2

| Ex. | Solvant de réaction/ dilution | Rapport pondéral % | Coloration | Viscosité 25°C-21 % |
|---|---|---|---|---|
| 6 | DMEU/DMEU | 72/28 | 0,030 | 3342 |
| 7 | DMEU/γBL | 60/40 | 0,045 | 643 |
| 8 | DMEU/DMAC | 60/40 | 0,047 | 2771 |
| 9 | DMEU/TMU | 60/40 | 0,048 | 3290 |
| 10 | DMEU/DMF | 72/28 | 0,054 | 405 |

EXEMPLE 11 -

Appareil :

On utilise un appareil comparable à celui décrit dans l'exemple 1, mais de capacité égale à 100 ml.

Réactifs :

- anhydride trimellique (ANTM) 2,58 g (0,01344 mole)
- acide téréphtalique (AT) 0,445 g(0,00268 mole)
- AISNa 0,1795 g(0,00067mole)
- Toluylène diisocyanate (TDI) 2,92 g (0,0168 mole)
  d = 1,225 environ 2,4 ml
- DMEU (polycondensation) 12,56 g (d=1,055) soit environ 11,9ml
- DMEU (dilution) 4,92 g (d=1,055) soit environ 4,65ml

Rapport des solvants polycondensation/dilution : 72/28.

Mode opératoire :

On charge sous azote ANTM, AT, AISNa, 1 morceau de pierre-ponce, la DMEU et le TDI. On plonge le réacteur dans le bain d'huile et on agite la masse (montée à 198°C en 10 mn, dissolution des réactifs vers 100°C). Mise en place du réfrigérant et de la surpression d'azote. On laisse réagir à 198°C pendant 2 H 15, on ajoute la DMEU de dilution, on homogénéise (peu visqueux) et on stocke en container de 60 ml.

Caractérisation :

Masses moléculaires :

| $\bar{Mn}$ | $\bar{Mw}$ | $\bar{Mz}$ | Polydispersité |
|---|---|---|---|
| 27460 | 53660 | 80250 | 1,95 |

EXEMPLE 12 -

Appareil : On utilise l'appareil décrit dans l'exemple 11.

Réactifs :

- ANTM 2,58 g (0,01344 mole)
- AT 0,445 g (0,00268 mole)
- AISNa 0,1795 g(0,00067 mole)
- Hexaméthylène diiocyanate (HDI). 2,82 g (0,0168 mole)
  d=1,04 environ 2,7 ml
- DMEU (polycondensation) 12,29 g (d=1,055) soit environ 11,65ml
- DMEU (dilution) 4,31 g (d=1,056) soit environ 4,55ml

Mode opératoire :

On charge l'ANTM, AT, AISNa, la DMEU et l'HDI. On plonge le réacteur dans le bain d'huile et on agite la masse (montée à 198°C en 10 mn, dissolution totale des réactifs vers 100°C). Mise en place du réfrigérant et la surpression d'azote. On laisse réagir à 198°C pendant 8 H 25 (pas d'augmentation de viscosité), on ajoute la DMEU de dilution, on homogénéise et on stocke en container de 60 ml.

Caractérisation :

Masses moléculaires :

| $\bar{Mn}$ | $\bar{Mw}$ | $\bar{Mz}$ | Polydispersité |
|---|---|---|---|
| 9960 | 19870 | 34080 | 1,99 |

EXEMPLE 13 comparatif -

On réalise un essai avec de la DMEU de pH >7 en utilisant les réactifs indiqués dans l'exemple 6 dans les même proportions.

On observe un début de précipitation après 70 mn de réaction/température (masse réactionnelle 158°C). A 175°C, le précipité n'a pas disparu. On coule la DMEU de dilution mais on n'observe pas de redissolution. Un tel solvant n'est donc pas utilisable pour la préparation de solutions selon l'invention.

## Revendications

**Revendications pour les Etats contractants suivants : AT, BE, CH, DE, FR, GB, IT, LI, LU, NL, SE**

**1.** Solutions limpides directement filables et conformables caractérisées par le fait qu'elles contiennent :

a) 4 à 35 % en poids d'un polyamide-imide comportant :

- des unités de récurrence amide-imide (A) de formule :

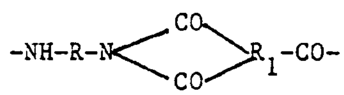

- des unités de récurrence amide (B) de formule :

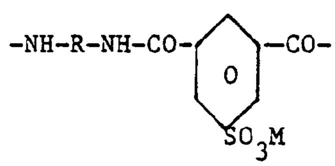

- des unités de récurrence amide (C) de formule :

$$-NR-R-NH-CO-R_2-CO-$$

dans lesquelles :

R = radical organique divalent
$R_1$ = radical aromatique trivalent
$R_2$ = radical aromatique divalent
M = métal alcalin ou alcalino terreux,

| | | | | | |
|---|---|---|---|---|---|
| Les unités A | représentant | 82 à 94 % | de l'ensemble | des | unités |
| Les unités B | " | 1 à 3 % | " | " | " |
| Les unités C | " | 5 à 15 % | " | " | " |

et ayant un indice de polydispersité I ≦ 2,1

b) dans un mélange solvant comprenant :

- 45-100 % en poids de diméthyléthylène urée de pH inférieur ou égal à 7
- 0-55 % d'un solvant polaire aprotique anhydre de point d'ébullition élevé

**2.** Solutions selon la revendication 1) caractérisées par le fait qu'elles possèdent une coloration quantitifée par la mesure de l'absorbance à une longueur d'onde de 500 nm d'une solution à 21 % de polymère dilué 10 fois au moyen d'un spectrophotomètre Philips PU 8600, comprise entre 0,010 et 0,060.

**3.** Solutions selon la revendication 1) caractérisées par le fait que le mélange solvant comprend 50 à 80 % de diméthyléthylène urée et 20 à 50 % d'un solvant polaire aprotique de point d'ébullition élevé.

4. Solutions filables selon la revendication 1) caractérisées par le fait que la concentration en polyamide-imide dans le mélange est comprise entre 5 et 35 %.

5. Solutions filables selon la revendication 1) caractérisées par le fait que le solvant polaire est la N-méthylpyrrolidone, le diméthylacétamide, le diméthylformamide, la tétraméthylurée ou la butyrolactone.

6. Solutions filables selon la revendication 1) caractérisées par le fait que dans les unités A,B,C, R est un radical aromatique ou aliphatique.

7. Solutions filables selon les revendications 1) et 6) caractérisées par le fait que R est un radical de formule :

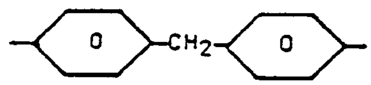

8. Solutions filables selon les revendications 1) et 6) caractérisées par le fait que R est un radical de formule :

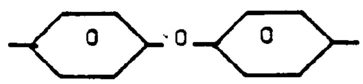

9. Solutions filables selon la revendication 1) caractérisées par le fait que les unités amides-imides A contiennent un radical $R_1$ de formule :

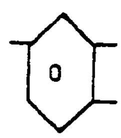

10. Solutions filables selon la revendication 1) caractérisées par le fait que les unités amides B contiennent un radical $R_2$ de formule :

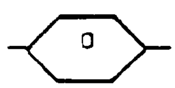

11. Solutions filables selon la revendication 1) caractérisées par le fait que les unités amides B contiennent un groupe $SO_3M$ dans lequel M est un métal alcalin.

12. Procédé pour l'obtention de solutions directement filables et conformables à base de polyamides-imides caractérisé par le fait que :
- la polycondensation est effectuée entre au moins
  a-un diisocyanate de formule OCN-R-NCO
    dans laquelle R est un groupe organique divalent
  b-un anhydride acide aromatique
  c-un dicarboxy-3,5 benzène sulfonate alcalin ou alcalino terreux
  d-un diacide aromatique

  en proportions telles que le rapport molaire $\frac{a.}{b+c+d}$ soit sensiblement égal à 1 et que l'anhydride acide soit présent à raison de 82 à 94 moles %, le benzène sulfonate à raison de 1 à 3 %, l'acide aromatique à raison de 5 à 15 moles % par rapport à l'ensemble des réactifs acides, dans la diméthyléthylène urée de pH $\leqq$7 comme solvant de polycondensation, la concentration en polymère avant dilution étant comprise entre 10 et 40 %, puis
- la dilution est ensuite effectuée à une température comprise entre 120 et 200°C dans un solvant aprotique polaire de haut point d'ébullition de sorte que la concentration finale en polyamide-imide dans le mélange solvant soit comprise entre 4 et 35 % et que le rapport pondéral solvant de réaction/solvant de dilution soit compris entre 45/55 et 100/0.

**13.** Procédé selon la revendication 12) caractérisé par le fait que le rapport pondéral solvant de réaction/solvant de dilution est compris entre 50/50 et 80/20.

**14.** Procédé selon la revendication 12) caractérisé par le fait qu'avant dilution la concentration en polymère est comprise entre 12 et 38 %.

**15.** Procédé selon la revendication 12) caractérisé par le fait qu'après dilution la concentration du polymère est comprise entre 5 et 35 %.

**16.** Procédé selon la revendication 12) caractérisé par le fait que la dilution est effectuée à une température comprise entre 145 et 190°C.

**17.** Procédé selon la revendication 12) caractérisé par le fait que diisocyanate utilisé est un diisocyanate aromatique ou aliphatique.

**18.** Procédé selon la revendication 12) et 17), caractérisé par le fait que le diisocyanate utilisé est le diphénylméthane 4,4' ou le diphényléther 4,4' -diisocyanate.

**19.** Procédé selon la revendication 12) caractérisé par le fait que l'anhydride acide aromatique est l'anhydride trimellique.

**20.** Procédé selon la revendication 12) caractérisé par le fait que l'acide aromatique est l'acide téréphtalique.

**21.** Procédé selon la revendication 12) caractérisé par le fait que le benzène sulfonate est le sel de sodium ou potassium.

**Revendications pour l'Etat contractant suivant: ES**

**1.** Procédé pour l'obtention de solutions directement filables et conformables à base de polyamides-imides caractérisé par le fait que :

- la polycondensation est effectuée entre au moins
  a-un diisocyanate de formule OCN-R-NCO
  dans laquelle R est un groupe organique divalent
  b-un anhydride acide aromatique
  c-un dicarboxy-3,5 benzène sulfonate alcalin ou alcalino terreux
  d-un diacide aromatique

  en proportions telles que le rapport molaire $\frac{a.}{b+c+d}$ soit sensiblement égal à 1 et que l'anhydride acide soit présent à raison de 82 à 94 moles %, le benzène sulfonate à raison de 1 à 3 %, l'acide aromatique à raison de 5 à 15 moles % par rapport à l'ensemble des réactifs acides, dans la diméthyléthylène urée de pH $\leqq 7$ comme solvant de polycondensation, la concentration en polymère avant dilution étant comprise entre 10 et 40 %, puis
- la dilution est ensuite effectuée à une température comprise entre 120 et 200°C dans un solvant aprotique polaire de haut point d'ébullition de sorte que la concentration finale en polyamide-imide dans le mélange solvant soit comprise entre 4 et 35 % et que le rapport pondéral solvant de réaction/solvant de dilution soit compris entre 45/55 et 100/0.

**2.** Procédé selon la revendication 1) caractérisé par le fait que le rapport pondéral solvant de réaction/solvant de dilution est compris entre 50/50 et 80/20.

**3.** Procédé selon la revendication 1) caractérisé par le fait qu'avant dilution la concentration en polymère est comprise entre 12 et 38 %.

**4.** Procédé selon la revendication 1) caractérisé par le fait qu'après dilution la concentration du polymère est comprise entre 5 et 35 %.

**5.** Procédé selon la revendication 1) caractérisé par le fait que la dilution est effectuée à une température comprise entre 145 et 190°C.

**6.** Procédé selon la revendication 1) caractérisé par le fait que diisocyanate utilisé est un diisocyanate aromatique ou aliphatique.

7. Procédé selon la revendication 1) et 6), caractérisé par le fait que le diisocyanate utilisé est le diphénylméthane 4,4' ou le diphényléther 4,4' -diisocyanate.

8. Procédé selon la revendication 1) caractérisé par le fait que l'anhydride acide aromatique est l'anhydride trimellique.

9. Procédé selon la revendication 1) caractérisé par le fait que l'acide aromatique est l'acide téréphtalique.

10. Procédé selon la revendication 1) caractérisé par le fait que le benzène sulfonate est le sel de sodium ou potassium.

## Patentansprüche

### Patentansprüche für folgende Vertragsstaaten : AT, BE, CH, DE, FR, GB, IT, LI, LU, NL, SE

1. Direkt verspinnbare und formbare klare Lösungen, dadurch gekennzeichnet, daß sie enthalten:
   a) 4 bis 35 Gew.% eines Polyamidimids, umfassend
   - wiederkehrende Amidimid-Einheiten (A) der Formel:

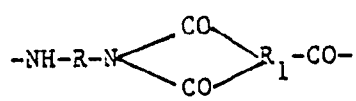

   - wiederkehrende Amid-Einheiten (B) der Formel:

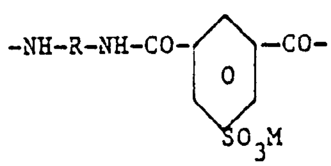

   - wiederkehrende Amid-Einheiten (C) der Formel:

$$-NR-R-NH-CO-R_2-CO-$$

   worin:
   R = zweiwertiger organischer Rest
   $R_1$ = dreiwertiger aromatischer Rest
   $R_2$ = zweiwertiger aromatischer Rest
   M = Alkali- oder Erdalkalimetall,
   wobei die Einheiten A 82 bis 94% der Gesamtheit der Einheiten ausmachen,
   die Einheiten B 1 bis 3% der Gesamtheit der Einheiten ausmachen,
   die Einheiten C 5 bis 15% der Gesamtheit der Einheiten ausmachen,
   und aufweisend einen Polydispersitätsindex $I \leqq 2,1$
   b) in einem Lösungsmittelgemisch umfassend
   - 45 bis 100 Gew.% Dimethylethylenharnstoff mit einem pH von geringer oder gleich 7
   - 0 bis 55% eines wasserfreien aprotischen polaren Lösungsmittels mit hohem Siedepunkt.

2. Lösungen gemäß Anspruch 1, dadurch gekennzeichnet, daß sie eine Färbung, quantitativ bestimmt durch Messung der dekadischen Extinktion bei einer Wellenlänge von 500 nm einer 21%igen Lösung des zehnfach verdünnten Polymeren mit Hilfe eines Philips Spectrophotometers PU 8600, zwischen 0,010 und 0,060 besitzen.

3. Lösungen gemäß Anspruch 1, dadurch gekennzeichnet, daß das Lösungsmittelgemisch 50 bis 80% Dimethylethylenharnstoff und 20 bis 50% eines aprotischen polaren Lösungsmittels mit hohem Siedepunkt umfaßt.

4. Spinnbare Lösungen gemäß Anspruch 1, dadurch gekennzeichnet, daß die Konzentration an Polyamidimid in dem Gemisch zwischen 5 und 35% beträgt.

5. Spinnbare Lösungen gemäß Anspruch 1, dadurch gekennzeichnet, daß das polare Lösungsmittel N-Methylpyrrolidon, Dimethylacetamid, Dimethylformamidy Tetramethylharnstoff oder Butyrolacton ist.

6. Spinnbare Lösungen gemäß Anspruch 1, dadurch gekennzeichnet, daß in den Einheiten A, B, C R für einen aromatischen oder aliphatischen Rest steht.

7. Spinnbare Lösungen gemäß Anspruch 1 und 6, dadurch gekennzeichnet, daß R für einen Rest der Formel

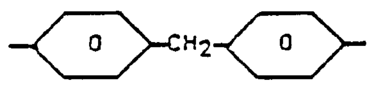

steht.

8. Spinnbare Lösungen gemäß den Ansprüchen 1 und 6, dadurch gekennzeichnet, daß der Rest R für einen Rest der Formel

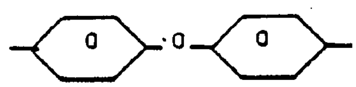

steht.

9. Spinnbare Lösungen gemäß Anspruch 1, dadurch gekennzeichnet, daß die Amidimid-Einheiten A einen Rest $R_1$ der Formel

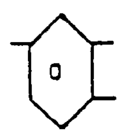

enthalten.

10. Spinnbare Lösungen gemäß Anspruch 1, dadurch gekennzeichnet, daß die Amid-Einheiten B einen Rest $R_2$ der Formel

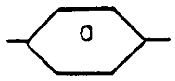

enthalten.

11. Spinnbare Lösungen gemäß Anspruch 1, dadurch gekennzeichnet, daß die Amid-Einheiten B eine Gruppe $SO_3M$ enthalten, worin M für ein Alkalimetall steht.

12. Verfahren zur Herstellung von direkt verspinnbaren und formbaren Lösungen auf Basis von Polyamidimiden, dadurch gekennzeichnet, daß
   - die Polykondensation durchgeführt wird zwischen zumindest
   a) einem Diisocyanat der Formel OCN-R-NCO, worin R für eine zweiwertige organische Gruppe steht,
   b) einem aromatischen Säureanhydrid,
   c) einem Alkali- oder Erdalkali-3,5-dicarboxybenzolsulfonat,
   d) einer aromatischen Disäure

in derartigen Anteilen, daß das Mol-Verhältnis $\frac{a}{b+c+d}$ im wesentlichen gleich 1 ist und daß das Säureanhydrid in einer Menge von 82 bis 94 Mol%, das Benzolsulfonat in einer Menge von 1 bis 3%, die aromatische Säure in einer Menge von 5 bis 15 Mol%, bezogen auf die Gesamtheit der sauren Reagentien in dem Dimethylethylenharnstoff mit einem pH-Wert ≦ 7 als Polykondensationslösungsmittel vorliegen, wobei die Konzentration an Polymerem vor der Verdünnung zwischen 10 und 40% beträgt, wonach

die Verdünnung bei einer Temperatur zwischen 120 und 200°C in einem polaren aprotischen Lösungsmittel mit hohem Siedepunkt durchgeführt wird, derart, daß die Endkonzentration an Polyamidimid in dem Lösungsmittelgemisch zwischen 4 und 35% beträgt und daß das Gewichtsverhältnis Reaktionslösungsmittel/Verdünnungslösungsmittel zwischen 45/55 und 100/0 beträgt.

**13.** Verfahren gemäß Anspruch 12, dadurch gekennzeichnet, daß das Gewichtsverhältnis Reaktionslösungsmittel/Verdünnungslösungsmittel zwischen 50/50 und 80/20 beträgt.

**14.** Verfahren gemäß Anspruch 12, dadurch gekennzeichnet, daß die Konzentration an Polymerem vor der Verdünnung zwischen 12 und 38% beträgt.

**15.** Verfahren gemäß Anspruch 12, dadurch gekennzeichnet, daß die Konzentration des Polymeren nach der Verdünnung zwischen 5 und 35% beträgt.

**16.** Verfahren gemäß Anspruch 12, dadurch gekennzeichnet, daß die Verdünnung bei einer Temperatur zwischen 145 und 190°C durchgeführt wird.

**17.** Verfahren gemäß Anspruch 12, dadurch gekennzeichnet, daß das verwendete Diisocyanat ein aromatisches oder aliphatisches Diisocyanat ist.

**18.** Verfahren gemäß Anspruch 12 und 17, dadurch gekennzeichnet, daß das verwendete Diisocyanat das 4,4'-Diphenylmethanoder das 4,4'-Diphenyletherdiisocyanat ist.

**19.** Verfahren gemäß Anspruch 12, dadurch gekennzeichnet, daß das aromatische Säureanhydrid Trimellithsäureanhydrid ist.

**20.** Verfahren gemäß Anspruch 12, dadurch gekennzeichnet, daß die aromatische Säure Terephthalsäure ist.

**21.** Verfahren gemäß Anspruch 12, dadurch gekennzeichnet, daß das Benzolsulfonat das Natrium- oder Kaliumsalz ist.

**Patentansprüche für folgenden Vertragsstaat : ES**

**1.** Verfahren zur Herstellung von direkt verspinnbaren und formbaren Lösungen auf Basis von Polyamidimiden, dadurch gekennzeichnet, daß

die Polykondensation durchgeführt wird zwischen zumindest

a) einem Diisocyanat der Formel OCN-R-NCO, worin R für eine zweiwertige organische Gruppe steht,
b) einem aromatischen Säureanhydrid,
c) einem Alkali- oder Erdalkali-3,5-dicarboxybenzolsulfonat,
d) einer aromatischen Disäure

in derartigen Anteilen, daß das Mol-Verhältnis $\frac{a}{b+c+d}$ im wesentlichen gleich 1 ist und daß das Säureanhydrid in einer Menge von 82 bis 94 Mol%, das Benzolsulfonat in einer Menge von 1 bis 3%, die aromatische Säure in einer Menge von 5 bis 15 Mol%, bezogen auf die Gesamtheit der sauren Reagentien in dem Dimethylethylenharnstoff mit einem pH ≦ 7 als Polykondensationslösungsmittel vorliegen, wobei die Konzentration an Polymerem vor der Verdünnung zwischen 10 und 40% beträgt, wonach

die Verdünnung anschließend bei einer Temperatur zwischen 120 und 200°C in einem aprotischen polaren Lösungsmittel mit hohem Siedepunkt derart durchgeführt wird, daß die Endkonzentration an Polyamidimid in dem Lösungsmittelgemisch zwischen 4 und 35% beträgt und daß das Gewichtsverhältnis Reaktionslösungsmittel/Verdünnungslösungsmittel zwischen 45/55 und 100/0 beträgt.

**2.** Verfahren gemäß Anspruch 1, dadurch gekennzeichnet, daß das Gewichtsverhältnis Reaktionslösungsmittel/Verdünnungslösungsmittel zwischen 50/50 und 80/20 beträgt.

**3.** Verfahren gemäß Anspruch 1, dadurch gekennzeichnet, daß die Konzentration an Polymerem vor der Verdünnung zwischen 12 und 38% beträgt.

4. Verfahren gemäß Anspruch 1, dadurch gekennzeichnet, daß die Konzentration des Polymeren nach der Verdünnung zwischen 5 und 35% beträgt.

5. Verfahren gemäß Anspruch 1, dadurch gekennzeichnet, daß die Verdünnung bei einer Temperatur zwischen 145 und 190°C durchgeführt wird.

6. Verfahren gemäß Anspruch 1, dadurch gekennzeichnet, daß das verwendete Diisocyanat ein aromatisches oder aliphatisches Diisocyanat ist.

7. Verfahren gemäß Anspruch 1 und 6, dadurch gekennzeichnet, daß das verwendete Diisocyanat das 4,4'-Diphenylmethan- oder das 4,4'-Diphenyletherdiisocyanat ist.

8. Verfahren gemäß Anspruch 1, dadurch gekennzeichnet, daß das aromatische Säureanhydrid Trimellithsäureanhydrid ist.

9. Verfahren gemäß Anspruch 1, dadurch gekennzeichnet, daß die aromatische Säure Terephthalsäure ist.

10. Verfahren gemäß Anspruch 1, dadurch gekennzeichnet, daß das Benzolsulfonat das Natrium- oder Kaliumsalz ist.

## Claims

**Claims for the following Contractins States : AT, BE, CH, DE, FR, GB, IT, LI, LU, NL, SE**

1. Clear solutions which are directly spinnable and formable, characterised in that they contain:
   a) 4 to 35% by weight of a polyamide-imide containing:
   - recurring amide-imide units (A) of formula:

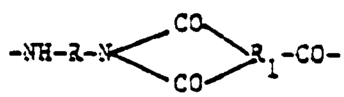

   - recurring amide units (B) of formula:

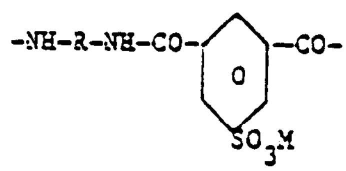

   - recurring amide units (C) of formula:

$$-NR-R-NH-CO-R_2-CO-$$

   in which:
   R = divalent organic radical
   $R_1$ = trivalent aromatic radical
   $R_2$ = divalent aromatic radical
   M = alkali metal or alkaline earth metal,
   the units A representing 82 to 94% of the collective units
   the units B representing 1 to 3% of the collective units
   the units C representing 5 to 15% of the collective units and having a polydispersity index $I \leqq 2.1$
   b) in a solvent mixture comprising:
   - 45-100% by weight of dimethylethyleneurea of pH less than or equal to 7
   - 0-55% of an anhydrous aprotic polar solvent of high boiling point.

2. Solutions according to Claim 1, characterised in that they possess a coloration, quantified by measurement of the absorbance at a wavelength of 500 nm of a 21% solution of polymer diluted 10-fold, using a

Philips PU 8600 spectrophotometer, of between 0.010 and 0.060.

3. Solutions according to Claim 1, characterised in that the solvent mixture comprises 50 to 80% of dimethylethyleneurea and 20 to 50% of an aprotic polar solvent of high boiling point.

4. Spinnable solutions according to Claim 1, characterised in that the polyamide-imide concentration in the mixture is between 5 and 35%.

5. Spinnable solutions according to Claim 1, characterised in that the polar solvent is N-methylpyrrolidone, dimethylacetamide, dimethylformamide, tetramethylurea or butyrolactone.

6. Spinnable solutions according to Claim 1, characterised in that, in the units A, B, C, R is an aromatic or aliphatic radical.

7. Spinnable solutions according to Claims 1 and 6, characterised in that R is a radical of formula:

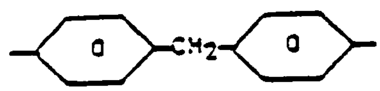

8. Spinnable solutions according to Claims 1 and 6, characterised in that R is a radical of formula:

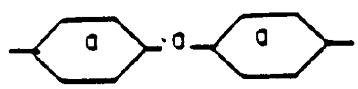

9. Spinnable solutions according to Claim 1, characterised in that the amide-imide units A contain a radical $R_1$ of formula:

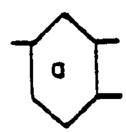

10. Spinnable solutions according to Claim 1, characterised in that the amide units B contain a radical $R_2$ of formula:

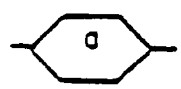

11. Spinnable solutions according to Claim 1, characterised in that the amide units B contain a group $SO_3M$ in which M is an alkali metal.

12. Process for obtaining solutions which are directly spinnable and formable based on polyamide-imides, characterised in that:
   - polycondensation is performed between at least
     a - a diisocyanate of formula OCN-R-NCO in which R is a divalent organic group
     b - an aromatic acid anhydride
     c - an alkali metal or alkaline earth metal 3,5-dicarboxybenzenesulphonate
     d - an aromatic diacid

   in proportions such that the mole ratio $\frac{a}{b+c+d}$ is substantially equal to 1 and that the acid anhydride is present in the proportion of 82 to 94 mol%, the benzenesulphonate in the proportion of 1 to 3% and the aromatic acid in the proportion of 5 to 15 mol% relative to the collective acidic reactants, in dimethylethyleneurea of $pH \leqq 7$ as polycondensation solvent, the polymer concentration before dilution being between 10 and 40%, and then

- dilution is then performed at a temperature of between 120 and 200°C in a polar aprotic solvent of high boiling point so that the final polyamide-imide concentration in the solvent mixture is between 4 and 35% and that the reaction solvent/dilution solvent weight ratio is between 45:55 and 100:0.

**13.** Process according to Claim 12, characterised in that the reaction solvent/dilution solvent weight ratio is between 50:50 and 80:20.

**14.** Process according to Claim 12, characterised in that, before dilution, the polymer concentration is between 12 and 38%.

**15.** Process according to Claim 12, characterised in that, after dilution, the polymer concentration is between 5 and 35%.

**16.** Process according to Claim 12, characterised in that the dilution is performed at a temperature of between 145 and 190°C.

**17.** Process according to Claim 12, characterised in that the diisocyanate used is an aromatic or aliphatic diisocyanate.

**18.** Process according to Claims 12 and 17, characterised in that the diisocyanate used is diphenylmethane 4,4'- or diphenyl ether 4,4'-diisocyanate.

**19.** Process according to Claim 12, characterised in that the aromatic acid anhydride is trimellitic anhydride.

**20.** Process according to Claim 12, characterised in that the aromatic acid is terephthalic acid.

**21.** Process according to Claim 12, characterised in that the benzenesulphonate is the sodium or potassium salt.

**Claims for the following Contracting State : ES**

**1.** Process for obtaining solutions which are directly spinnable and formable based on polyamide-imides, characterised in that:
- polycondensation is performed between at least
  a - a diisocyanate of formula OCN-R-NCO in which R is a divalent organic group
  b - an aromatic acid anhydride
  c - an alkali metal or alkaline earth metal 3,5-dicarboxybenzenesulphonate
  d - an aromatic diacid

  in proportions such that the mole ratio $\frac{a}{b+c+d}$ is substantially equal to 1 and that the acide anydride is present in the proportion of 82 to 94 mol%, the benzenesulphonate in the proportion of 1 to 3% and the aromatic acid in the proportion of 5 to 15 mol% relative to the collective acidic reactants, in dimethylethylene-urea of pH $\leqq$ 7 as polycondensation solvent, the polymer concentration before dilution being between 10 and 40%, and then
- dilution is then performed at a temperature of between 120 and 200°C in a polar aprotic solvent of high boiling point so that the final polyamide-imide concentration in the solvent mixture is between 4 and 35% and that the reaction solvent/dilution solvent weight ratio is between 45:55 and 100:0.

**2.** Process according to Claim 1, characterised in that the reaction solvent-dilution solvent weight ratio is between 50:50 and 80:20.

**3.** Process according to Claim 1, characterised in that, before dilution, the polymer concentration is between 12 and 38%.

**4.** Process according to Claim 1, characterised in that, after dilution, the polymer concentration is between 5 and 35%.

**5.** Process according to Claim 1, characterised in that the dilution is performed at a temperature of between 145 and 190°C.

6. Process according to Claim 1, characterised in that the diisocyanate used is an aromatic or aliphatic diisocyanate.

7. Process according to Claims 1 and 6, characterised in that the diisocyanate used is a diphenylmethane 4,4'- or diphenyl ether 4,4'-diisocyanate.

8. Process according to Claim 1, characterised in that the aromatic acid anhydride is trimellitic anhydride.

9. Process according to Claim 1, characterised in that the aromatic acid is terephthalic acid.

10. Process according to Claim 1, characterised in that the benzenesulphonate is the sodium or potassium salt.